Europäisches Patentamt

European Patent Office

Office européen des brevets

(11) Veröffentlichungsnummer : **0 139 152**
**B1**

(12) **EUROPÄISCHE PATENTSCHRIFT**

(45) Veröffentlichungstag der Patentschrift :
27.07.88

(51) Int. Cl.⁴ : **B 66 D   1/60, B 60 S   5/00**

(21) Anmeldenummer : **84109875.9**

(22) Anmeldetag : **18.08.84**

(54) **Reserveradwinde für einen LKW.**

(30) Priorität : **24.08.83 DE 3330499**

(43) Veröffentlichungstag der Anmeldung :
**02.05.85 Patentblatt 85/18**

(45) Bekanntmachung des Hinweises auf die Patenterteilung : **27.07.88 Patentblatt 88/30**

(84) Benannte Vertragsstaaten :
**AT DE FR GB IT NL SE**

(56) Entgegenhaltungen :
**DE-A- 3 143 273**
**DE-B- 2 238 933**
**FR-A- 2 260 527**

(73) Patentinhaber : **M A N Nutzfahrzeuge GmbH**
**Dachauer Strasse 667 Postfach 50 06 20**
**D-8000 München 50 (DE)**

(72) Erfinder : **Hannak, Kurt**
**Schmaedelstrasse 32**
**D-8000 München 60 (DE)**
Erfinder : **Knetsch, Holger**
**Ludwig-Ernst-Strasse 44**
**D-8060 Dachau (DE)**

EP 0 139 152 B1

## Beschreibung

Die Erfindung betrifft eine Reserveradwinde für ein Nutzfahrzeug, etwa einen LKW oder einen Omnibus, gemäß dem Oberbegriff des Anspruchs 1.

Eine solche Reserveradwinde ist in der DE-B-2 238 933 beschrieben und dient dazu, das schwere Reserverad eines Nutzfahrzeugs — gegebenenfalls zusammen mit einem Tragschlitten — zu Boden zu lassen bzw. ein austauschbares Rad aufzunehmen.

Eine solche Reserveradwinde weist eine Seiltrommel auf, die in einem Getriebegehäuse gelagert ist, welches ein selbsthemmendes Schneckengetriebe aufnimmt. Dieses weist ein Schneckenrad auf, das auf das Ende der Seiltrommel aufgeschoben ist, sowie eine Schnecke, die in den Seitenwänden des Getriebegehäuses gelagert ist und durch einen Hilfsantrieb, etwa eine Kurbel, antreibbar ist.

Obwohl eine Reserveradwinde erfahrungsgemäß nur selten verwendet wird und deshalb eine verhältnismäßig geringe Betriebslebensdauer benötigt, war es bisher doch erforderlich, das Getriebe und das Getriebegehäuse wie ein herkömmliches Schneckengetriebe und einen herkömmlichen Getriebekasten ausbilden, der als präzise bearbeitetes Formgußteil hergestellt und mit passenden Deckeln versehen ist, die am Getriebekasten angeschraubt sind. Das Getriebe ist in der Regel geschmiert, um das Festrosten der beweglichen Teile aneinander und am Getriebegehäuse zu vermeiden.

Ausgehend von diesem Stand der Technik liegt der Erfindung die Aufgabe zugrunde, die eingangs genannte Seilwinde dahingehend weiterzubilden, daß ihre Herstellung wesentlich verbilligt wird.

Diese Aufgabe wird durch die Merkmale des Anspruchs 1 gelöst ; hierbei ist das Getriebegehäuse nicht mehr, wie bisher, als geschlossenes Gehäuse ausgebildet, sondern es ist offen, so daß das Schneckenrad in das Gehäuse eingelegt werden kann. Die Lageraussparungen, welche die Schnecke führen, sind nicht als Bohrungen ausgebildet, sondern nur als Halbbohrungen, die zum Schneckenrad hin offen sind. Beim Zusammenbau wird die Schnecke mit ihren Lagerstummeln vom offenen Teil des Gehäuses her in die Halbbohrungen, die halbrunde Stützlager bilden, eingelegt, dann wird das Schneckenrad in seine Betriebslage gebracht, und schließlich wird die Seiltrommel in ihre Lagerbohrung und in das Schneckenrad eingeführt, bis sie ihre Betriebslage einnimmt. Da das halbrunde Stützlager auf der vom Schneckenrad abgewandten Seite der Schnecke angeordnet ist, ist die Schnecke in ihrer Betriebslage vom Schneckenrad gehalten und ist hinlänglich gelagert, um die Benutzung der Seilwinde zu ermöglichen. Gleichzeitig verhindert die Schnecke die Axialbewegung des Schneckenrades auf dem Ende der Seiltrommel, so daß dann, wenn auf das andere Ende der Seiltrommel ein herkömmliches Lagerblech aufgesetzt und ortsfest angebracht ist, ohne irgendwelche zusätzliche Befestigungsmittel das gesamte Getriebe nach denkbar einfacher Montage fest zusammenhält.

Die Öffnung im Getriebegehäuse muß lediglich den oben beschriebenen Zusammenbau ermöglichen, unterliegt aber sonst in ihrer Anbringung und Ausgestaltung keinen weiteren Einschränkungen.

Gemäß einer Ausgestaltung der Erfindung ist es aber von Vorteil, daß das Getriebegehäuse auf seiner Unterseite offen ist, also auf jener Seite des Schneckenrades, welche der Schnecke gegenüberliegt. Dies ermöglicht somit das Einführen von Schnecke und Schneckenrad aus einer einzigen Richtung und deshalb einen besonders raschen und bequemen Zusammenbau.

Gemäß einer weiteren Ausgestaltung der Erfindung erstrecken sich die Seitenwände des Lagergehäuses, die die offenen, halbrunden Stützlager tragen, nicht über die gesamte Höhe des Lagergehäuses, sondern bloß bis zu einer Stelle, die das Einführen des Schneckenrades in das Lagergehäuse in einer Richtung ermöglicht, die parallel zur Achse der Schnecke verläuft. Hierdurch werden — insbesondere in Verbindung mit dem offenen Boden des Getriebegehäuses — zusätzliche Freiheitsgrade für die Montage gewonnen, so daß der Zusammenbau des Schneckengetriebes problemlos in den Rahmen eines größeren Montageablaufes einbezogen werden kann.

Das erfindungsgemäße, offene Getriebegehäuse ist nicht mehr, wie der bekannte Schneckengetriebekasten, zur Aufnahme von Getriebeöl oder flüssigen Schmierstoffen geeignet. Es ist daher eine zusätzliche Maßnahme zum Vermeiden des Festrostens der beweglichen Teile erforderlich. Es ware nun möglich, diese Teile mit einer Beschichtung, etwa einem galvanischen Überzug, zu versehen. Gemäß einer weiteren Ausgestaltung der Erfindung ist es aber besonders von Vorteil, diese Teile aus Kunststoff zu bilden, da dieser einerseits korrosionsbeständig ist, andererseits aber für die wenigen Benutzungsfälle der Winde eine hinlängliche Festigkeit aufweist.

Eine weitere, entscheidende Verbilligung der erfindungsgemäßen Reserveradwinde kann dadurch erzielt werden, daß man die beweglichen Teile in einem Formungsverfahren herstellt etwa durch Druckguß, Formpressen oder dgl.. Um für das Schneckenrad den Bau einer komplizierten Form zu vermeiden, liegt eine weitere vorteilhafte Ausgestaltung der Erfindung darin, daß dieses Schneckenrad nur als Halbschneckenrad ausgebildet ist, also als ein Schneckenrad, welches nicht, wie ein herkömmliches Schneckenrad, in den halben Umfang der Schnecke eingreift, sondern nur in das Viertel des Umfanges, welches der Seiltrommel zugewandt ist. Dadurch wird ein Schneckenrad geschaffen, das einfach durch ein Formungsverfahren hergestellt werden kann.

Sollte die Festigkeit eines solchen Halbschneckenrades nicht ausreichend sein, genügt es, zwei solcher Halbschnekkenräder in entgegengesetzter Orientierung zusammenzusetzen, so daß diese gemeinsam wieder ein einziges Schneckenrad bilden. In diesem Fall ist es allerdings erforderlich, das von der Seiltrommel abgelegene Halbschneckenrad abzustützen oder zusätzlich auf der Seiltrommel oder am anderen Halbschneckenrad zu befestigen.

Bevorzugt stützt sich nicht nur das erste, sondern auch das zweite Halbschneckenrad an einer Wand des Getriebegehäuses ab, so daß keine zusätzliche Befestigung erforderlich ist.

·Gemäß einer weiteren Ausgestaltung der Erfindung weist das erfindungsgemäße Halbschneckenrad oder Schneckenrad an seinem Innenumfang angeformte Axialstege auf, welche zu komplementären Axialnuten im Ende der Seiltrommel derart ausgebildet sind, daß das Schneckenrad leicht auf dieses Ende aufgeschoben werden kann. Diese Axialstege bilden Längsprofile, wie etwa Verzahnungen.

Da das erfindungsgemäße Getriebegehäuse nicht, wie ein herkömmlicher Getriebekasten, mit genau passenden Getriebedeckeln versehen werden muß, kann das Getriebegehäuse gemäß einer weiteren Ausgestaltung der Erfindung als Schweißteil aus Blech ausgebildet sein, was dessen Herstellung noch weiter verbilligt.

Je nach der Anbringungsstelle der erfindungsgemäßen Reserveradwinde kann es von Vorteil sein, alle offenen Teile des Getriebegehäuses mit einer Abdeckung zu versehen, welche bevorzugt aus elastischem Kunststoff gebildet ist und auf das erfindungsgemäße Getriebegehäuse einfach aufgeklemmt oder aufgerastet werden kann.

Der Gegenstand der Erfindung ist anhand der beigefügten, schematischen Zeichnung beispielsweise noch näher erläutert. In dieser Zeichnung zeigen :

Fig. 1 die erfindungsgemäße Reserveradwinde in teilweise geschnittener Seitenansicht, und

Fig. 2 den Schnitt längs II-II durch die Seiltrommel der Reserveradwinde der Fig. 1.

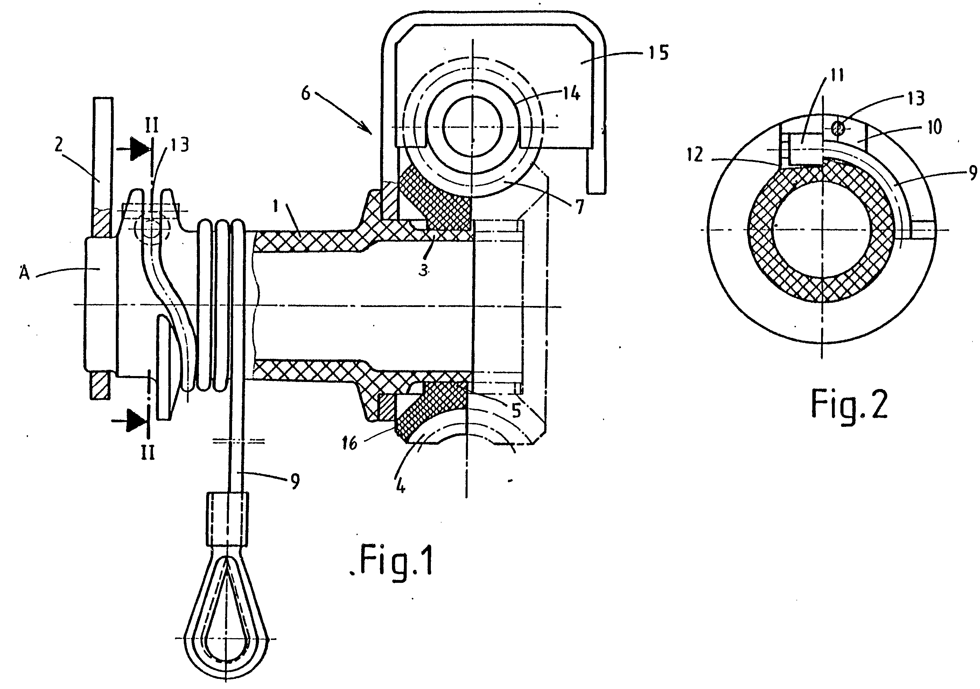

In Fig. 1 ist eine Reserveradwinde gezeigt, die eine Kunststoff-Seiltrommel aufweist. Deren eines Ende A ist in einem Lagerblech 2 drehbar derart abgestützt, daß ihre Axialbewegung in Richtung zum Lagerblech 2 verhindert ist.

Vor dem anderen Ende der Seiltrommel 1 ist ein Ringbund angeordnet, der sich auf der Stirnwand eines Getriebegehäuses 6 abstützt. Diese Stirnwand wird vom Ende 3 der Seiltrommel 1 durchdrungen. Das Ende 3 weist am Außenumfang Axialnuten auf.

Zu diesen Axialnuten komplementär sind Längsstege 5 am Innenumfang eines Halbschneckenrades 4 ausgebildet. Dieses Halbschneckenrad 4 steht mit einer sich quer zur Seiltrommel erstreckenden Schnecke 7 in Antriebseingriff.

An seinem von der Schnecke 7 abgewandten, axialen Ende trägt das Halbschneckenrad eine Radialfläche 16, die gegen die Innenseite der das Ende 3 der Seiltrommel 1 aufnehmenden Stirnwand anliegt, um die Axialbewegung des Halbschneckenrades 4 von der Schnecke 7 weg zu verhindern.

Die Schnecke 7 weist zwei Endstummel auf, die jeweils in einem halbrunden Stützlager 14 aufgenommen sind, das in den beiden Seitenwänden 15 (in Fig. 1 ist nur eine gezeigt) des Getriebegehäuses 6 drehbar gelagert sind.

Innerhalb des Getriebegehäuses 6 weist die Schnecke 7 beiderseits eine Schulter auf, die gegen die Innenfläche der jeweiligen Seitenwand 15 anliegt und verhindert, daß sich die Schnecke 7 axial bewegen kann.

Am einen Ende (nicht gezeigt) trägt die Schnecke 7 eine Kupplung zum Ansetzen einer Kurbel oder eines sonstigen Hilfsantriebes.

Wie aus der Zeichnung ersichtlich, sind die halbrunden Stützlager 14 auf jener Seite der Schnecke 7 angeordnet, die vom Halbschneckenrad 4 abgewandt ist, und ist zu diesem hin offen, so daß die Schnecke vor Einbau des Halbschneckenrades 4 ohne weiteres in ihre Stützlager 14 eingelegt werden kann.

Die Seitenwände 15 erstrecken sich nur um ein geringes Stück über die jeweiligen Stützlager 14 hinaus.

Wie ferner aus der Zeichnung ersichtlich ist, ist das Getriebegehäuse 6 an seiner Unterseite völlig offen, wobei auch die Stirnwand verkürzt ist. Auch die von der Seiltrommel abgewandte Rückwand erstreckt sich nur wenig über die Seitenwände 15 hinaus, so daß das Halbschneckenrad 4 praktisch völlig frei liegt.

Wie in der Zeichnung strichpunktiert dargestellt, kann das in der Zeichnung rechte Ende der Seiltrommel 1 verlängert sein, und ein zweites Halbschneckenrad kann auf diese Verlängerung aufgesetzt sein. Dieses zweite Halbschneckenrad ist bezüglich dem ersten Halbschneckenrad 4 umgekehrt orientiert und an diesem befestigt, etwa angeklebt.

Die Seiltrommel 1 und die Schnecke 7 sind als Hohlteile ausgebildet und sind, wie auch das Halbschneckenrad 4, aus Kunststoff geformt.

Die Seiltrommel 1 trägt ein Seil 9, das in einen Schlitz 10 zwischen zwei auf dem Umfang der Seiltrommel 1 angeformten Vorsprüngen gebildet ist. Am Ende des Seiles ist ein Preßnippel 11 befestigt, der zusammen mit dem Seilende in einen Sitz 12 eingezogen ist. Ein quer zum Seilende durch die beiden obengenannten Vorsprünge hindurchgeführter Kerbstift 13 sichert den Preßnippel 11 und somit das Seilende gegen Herausziehen.

## Patentansprüche

1. Reserveradwinde für ein Nutzfahrzeug mit einer Seiltrommel (1), die mit dem einen Ende in der Stirnwand des Getriebegehäuses (6) drehbar gelagert ist, einem unverdrehbar auf dieses Ende der Seiltrommel (1) aufgeschobenen und innerhalb des Getriebegehäuses angebrachten Schneckenrad (4) und einer sich quer zur Seiltrommel erstreckenden Schnecke (7), deren beide Enden in jeweils einer Lagerausparung sitzen, die in jeder der Seitenwände (15) des Getriegehäuses vorgesehen ist, dadurch gekennzeichnet, daß das Getriebegehäuse (6) im Bereich des Schneckenrades (4) offen ist und daß die Lagerausparungen als zum Schneckenrad (4) hin offene, halbrunde Stützlager (14) ausgebildet sind.

2. Reserveradwinde nach Anspruch 1, dadurch gekennzeichnet, daß das Getriebegehäuse (6) auf der der Schnecke (7) gegenüberliegenden Unterseite des Schneckenrades (4) offen ist.

3. Reserveradwinde nach einem der Ansprüche 1 oder 2, dadurch gekennzeichnet, daß die Seitenwände (15) mit einem Abstand von der Mittelachse der Seiltrommel (1) enden, der größer ist als der Halbmesser des Schneckenrades (4).

4. Reserveradwinde nach einem der Ansprüche 1-3, dadurch gekennzeichnet, daß die Schnecke (7), das Schneckenrad (4) und die Seiltrommel (1) ganz aus Kunststoff gebildet sind.

5. Reserveradwinde nach Anspruch 4, dadurch gekennzeichnet, daß das Schneckenrad als Form-oder Gußteil ausgebildet ist und aus einem oder zwei Halbschneckenrädern (4) besteht, das oder die mit der Schnecke etwa über ein oder jeweils ein Viertel ihres Umfangs in Eingriff steht bzw. stehen.

6. Reserveradwinde nach Anspruch 5, dadurch gekennzeichnet, daß am Getriebegehäuse (6) eine Abstützung für das am freien Ende der Seiltrommel (1) sitzende Halbschneckenrad (4) ausgebildet ist.

7. Reserveradwinde nach einem der Ansprüche 1-6, dadurch gekennzeichnet, daß am Innenumfang des Schneckenrades (4) Längsstege (5) angeformt sind, die in komplementäre Längsnuten im Ende der Seiltrommel (1) einschiebbar sind.

8. Reserveradwinde nach einem der Ansprüche 1-7, dadurch gekennzeichnet, daß das Getriebegehäuse (6) als Schweißteil ausgebildet ist.

## Claims

1. A spare wheel winch for a commercial vehicle having a cable drum (1) rotatably mounted with one end in the front wall of the gear housing (6), a worm wheel (4) non-rotatably mounted on the said one end of the cable drum (1) and arranged inside the gear housing, and a worm gear (7) extending transversely of the cable drum and having two ends seated in respective bearing recesses provided in each of the side walls (15) of the gear housing, characterised in that the gear housing (6) is open in the region of the worm wheel (4), and in that the bearing recesses are constructed as semicircular pivot bearings (14) open towards the worm wheel (4).

2. A spare wheel winch according to claim 1, characterised in that the gear housing (6) is open on the underside of the worm wheel (4), which lies opposite the worm gear (7).

3. A spare wheel winch according to one of the claims 1 or 2, characterised in that the ends of the side walls (15) are spaced from the central axis of the cable drum (1) by a distance greater than the radius of the worm wheel (4).

4. A spare wheel winch according to one of the claims 1-3, characterised in that the worm gear (7), the worm wheel (4), and the cable drum (1) are constructed entirely of synthetic plastics material.

5. A spare wheel winch according to claim 4, characterised in that the worm wheel is constructed as a moulded or cast part and consists of one or two half worm wheels (4) each engaging with the worm gear over approximately one quarter of its circumference.

6. A spare wheel winch according to claim 5, characterised in that a support is formed for the half worm wheel (4) mounted on the gear housing (6) on the free end of the cable drum (1).

7. A spare wheel winch according to one of the claims 1-6, characterised in that longitudinal webs (5) are formed on the inside circumference of the worm wheel (4), said webs being insertable into corresponding longitudinal grooves in the end of the cable drum (1).

8. A spare wheel winch according to one of the claims 1-7, characterised in that the gear housing (6) is constructed as a welded part.

## Revendications

1. Treuil de manutention de la roue de secours d'un véhicule utilitaire, comprenant un tambour d'enroulement (1) qui est monté mobile en rotation par une de ses extrémités sur la paroi frontale du carter de transmission (6), une roue à vis sans fin, engagée sans possibilité de rotation sur cette extrémité du tambour d'enroulement (1), qui est montée à l'intérieur du carter de transmission, et une vis sans fin (7) s'étendant transversalement par rapport au tambour d'enroulement, dont les deux extrémités sont respectivement logées dans un évidement du palier, qui est prévu sur chacune des parois latérales (15) du carter de transmission caractérisé en ce que le carter de transmission (6) est ouvert dans la région de la roue à vis sans fin (4) et en ce que les évidements du palier sont réalisés sous forme de portées d'appui (14) demi-rondes, ouvertes en direction de la roue à vis sans fin (4).

2. Treuil pour roue de secours selon la revendication 1, caractérisé en ce que le carter de transmission (6) est ouvert sur la face inférieure de la roue à vis sans fin (4) située en regard de la vis sans fin (7).

3. Treuil pour roue de secours selon une des revendications 1 ou 2, caractérisé en ce que les parois latérales (15) s'achèvent à une distance de l'axe médian du tambour d'enroulement qui est supérieure au rayon de la roue à vis sans fin (4).

4. Treuil pour roue de secours selon une des revendications 1 à 3, caractérisé en ce que la vis sans fin (7), la roue à vis sans fin (4) et le tambour d'enroulement (1) sont entièrement réalisés en matière plastique.

5. Treuil pour roue de secours selon la revendication 4, caractérisé en ce que la roue à vis sans fin est réalisée sous forme de pièce profilée ou moulée et est constituée par une ou par deux demi-roues à vis sans fin qui est ou qui sont respectivement en prise avec la vis sans fin sur un quart de son pourtour.

6. Treuil pour roue de secours selon la revendication 5, caractérisé en ce qu'il est constitué sur le carter de transmission (6) un appui pour la demi-roue à vis sans fin (4) fixée sur l'extrémité libre du tambour d'enroulement (1).

7. Treuil pour roue de secours selon une des revendications 1-6, caractérisé en ce qu'il est constitué sur le pourtour intérieur de la roue à vis sans fin (4) de barrettes longitudinales (5) susceptibles de s'engager dans des rainures longitudinales aménagées à l'extrémité du tambour d'enroulement (1).

8. Treuil pour roue de secours selon une des revendications 1-7, caractérisé en ce que le carter de transmission (6) est constitué par un élément soudé.

Fig.2

Fig.1

1